# EUROPEAN PATENT APPLICATION

(11) **EP 4 654 165 A2**
(43) Date of publication of application: **26.11.2025**
(21) Application number: 24744444.1
(22) Date of filing: 16.01.2024
(51) Int. Cl.: G08B 7/06, G08B 23/00, B60Q 1/52, E01F 9/615

(54) **SIGNALLING DEVICE**

(30) Priority: 18.01.2023 ES 202330082 U
(71) Applicant: Martinez Navalon, Alejandro, 03420 Castalla (Alicante) (ES); Paya Verdu, Manuel, 03420 Castalla Alicante (ES)
(72) Inventor: Martinez Navalon, Alejandro, 03420 Castalla (Alicante) (ES); Paya Verdu, Manuel, 03420 Castalla Alicante (ES)
(74) Representative: Pardo Zapata, José
(86) International application number: PCT/ES2024/070026
(87) International publication number: WO 2024/153845

(57) **Abstract**

The invention discloses a signalling device for indicating that a road collision has occurred. The device comprises means for emitting a wireless signal from a vehicle when the vehicle hits an obstacle at a speed greater than 20 km/hour, said device being connected to a wireless receiver that activates an alarm. Furthermore, beacons that emit an alarm signal, are connected to a wireless receiver and are located on the shoulder of highways are disclosed.

## Description

### Technical field of the invention

The invention describes a signalling device suitable for indicating that a road collision has occurred. The device comprises means for emitting a wireless signal from a vehicle when the vehicle hits an obstacle at a speed greater than 20 km/h, said device being connected to a wireless receiver that activates an alarm.

The present invention describes a signalling device suitable for indicating critical situations in vehicles or after a collision. The device comprises a pressure sensor. The sensor is connected to a wireless transmitter/receiver set that activates an alarm.

The present invention describes alarms located in beacons, connected to a wireless receiver and located on the shoulder of highways.

### Background of the invention

Those skilled in the art know that when a vehicle stops on a road due to a breakdown or a collision, reflective triangles must be placed on the roadway to warn drivers behind and encourage them to reduce their speed.

However, in order to place the triangles, it is necessary for the driver to exit the vehicle. According to the statistics, a large number of deaths occur from being run over when the driver gets out of the car.

In recent years, sirens that magnetically attach to the car's roof when a breakdown occurs have been implemented, but these sirens (audible and/or visual alarms) are not suitable in the event of a collision. If the driver became incapacitated, he would not be able to activate the alarm; if the collision occurred in heavy traffic, there would be no time to set up the siren. In addition, sirens cannot be placed on the roof of vans or trucks without getting out of the vehicle due to their height.

Fog and gradient changes are the main causes of rear-end collisions or crashes on roads, due to loss of visibility. It is true that cars are implementing radar-guided anti-collision systems. It is also true that the vehicle fleet is aging and most vehicles do not have collision avoidance systems.

KR101745413B1 describes a lighting triangle at the rear of the car suitable for signalling emergency situations. This document does not disclose the use of pressure or impact sensors.

KR20140024200 discloses a light on the rear of the car coupled to an impact sensor suitable for avoiding collisions but does not have a wireless connection.

KR100503247 discloses a flashing emergency light to prevent secondary accidents.

CN108417019A describes a wireless collision warning system. The system comprises a wireless communication system with a GPS positioning module. In the event of a collision, the phone sends an alert to the traffic control centre to locate the accident area. Therefore, the use of a mobile phone is compulsory. Furthermore, it is not possible to prevent pile-up collisions instantly and automatically because the alarm is sent to the traffic control centre, which must take the necessary corrective action.

Currently, there are no alarms or beacons on the roads that emit light or sound signals.

The roads have information panels, but they are widely spaced apart. The information panels are not connected to the vehicles that travel on the roads. The information panels are controlled by the traffic control centre. The information they display includes, for example: "Traffic jams at 3 km", "Fog at km xx". This information warns drivers but does not prevent collisions.

### Object of the invention

The problem solved by the invention is to signal quickly and/or automatically when a collision has occurred or in emergency situations and to avoid pile-up collisions, i.e. the driver does not take any action or the driver activates an alarm signal without leaving the vehicle. The invention is not aimed at locating the area of a collision.

Another problem solved by the present invention is avoiding accidents when the driver leaves the vehicle to place the emergency triangles.

In a first aspect, the solution reached is a signalling device to prevent the pile-up collisions on the road, comprising means for emitting a wireless signal from a vehicle when the vehicle hits an obstacle at a speed greater than 20 km/h connected to a wireless receiver that activates an alarm. The device does not comprise a GPS positioning module. In a preferred embodiment, the alarms are located on the shoulder of highway.

Wireless means consist of hardware with a microcontroller, such as ESP32, and a series of sensors and actuators that communicate with the hardware.

The system contains a GSM module to establish a remote IoT data communication system. Thanks to the SIM connected to this module, a 2G connection is established, providing Internet connectivity via TCP/IP. Communication between wireless receivers and transmitters is achieved through this connectivity. Since both devices have internet connectivity, both devices can communicate using an IoT communication protocol called MQTT.

In a preferred embodiment, the means for emitting a wireless signal when the vehicle impacts at a speed greater than 20 km/h is a wireless transmitter connected to an accelerometer via Bluetooth^{®}. When the vehicle collides, a deceleration occurs, which is recorded by the accelerometer, the circuit is closed, and the wireless signal is emitted, which transmits to the receiver to emit an alarm. The wireless receiver is formed by a hardware consisting of an ESP32 and an LED strip that is activated via Bluetooth when it detects a deceleration captured by the accelerometer.

In another embodiment, the means for emitting a wireless signal is a pressure sensor that when activated connects at least one wireless transmitter that transmits the signal to a receiver that emits an alarm.

In a particular embodiment, the pressure sensor is a deformable part provided with electrodes inside. The deformation of the part causes the contact between the electrodes, closing the circuit that connects to the transmitter. The deformable part is located on the outside of the vehicle. In a preferred embodiment, the pressure sensor is activated above a threshold value of 20 km/h when an impact occurs.

In another particular embodiment, the pressure sensor is a switch located inside the vehicle. When it is pressed the circuit is closed. The switch is connected to a wireless transmitter with a hardware consisting of an ESP32 communicating via UART with the GSM module. The switch acts as a start and end push for the accident. In addition, the ESP32 enables Bluetooth^{®} communication so that communication is established between it and the alarm.

In another embodiment, the devices includes, as means for emitting the wireless signal, an accelerometer, a deformable part and a switch, all connected to the wireless transmitter.

For all embodiments, the wireless signal is transmitted to a wireless receiver connected to an alarm. The alarm is a luminous triangle located at the rear of the vehicle, preferably on a flexible substrate that adheres to the rear of the vehicle.

In a more preferred embodiment, the alarm is luminous or sound. As described above, the alarm is located in beacons on the shoulder of highway. The receiver hardware consists of an ESP32 communicating via UART with the transmitter, the SIM800L GSM module, and an alarm, for example an LED strip, which will alert road users. Additionally, the system contains solar power panels and/or batteries.

The alarms located on the shoulder prevent vehicle collisions in fog banks. The luminous beacons are activated when an impact has occurred and alert vehicles travelling behind at a distance of 100-1000 meters.

### Detailed description of the invention

Wireless transmitters and receivers are known to those skilled in the art. The transmission range depends on the operating frequency. The signal can be transmitted via Bluetooth^{®}, radio frequency using RFID tags, GPS with SIM cards, via UART with GSM module, etc.

Pressure sensors are known to those skilled in the art. Pressure sensors close an electrical circuit when a threshold pressure is applied to them.

Accelerometers are instruments that measure speed variations. Piezoelectric accelerometers can be considered pressure sensors, since when a crystalline lattice is pressed, an electrical charge proportional to the applied force is produced.

In one embodiment, the device comprises an accelerometer (12). When the vehicle hits an obstacle at a speed greater than a threshold value, for example 20 km/h, a deceleration occurs that is captured by the accelerometer, generating an electric current that activates the wireless transmitter (11).

In one embodiment, the device comprises a pressure sensor which is a switch (3) located inside the vehicle. This pressure sensor is suitable, for example, when the vehicle has a flat tire, when the vehicle enters a fog bank, or when traffic jams are observed on the road.

In another embodiment, the device comprises a pressure sensor (9) that is formed by a deformable part (2) with two separate electrodes (1a, 1b). When an impact occurs, the part (2) is deformed and the electrodes (1) close the circuit. The pressure sensor (9) is fixed to the vehicle body. In a preferred embodiment, the pressure sensor (9) is located at the front of the vehicle below the license plate.

When an impact occurs, the sensor is activated. By varying the modulus of elasticity of the deformable part, the circuit closes when the vehicle travels at a speed greater than 20 km/h. Because the deformation force depends on the vehicle's kinetic energy and, in turn, the vehicle's energy depends on the mass, the person skilled in the art can vary the characteristics of the deformable part (2) so that it is activated above a threshold value of 20 km/h. This embodiment is suitable when a collision has occurred and pile-up collisions are to be avoided.

Obviously, in another embodiment, the system includes an accelerometer (12), a switch (3) inside the vehicle and a sensor (9) formed by the deformable part (2) with the electrodes (1). When the circuits are closed, the transmitters (11, 5, 4) emit the wireless signal. The wireless signal can be of any frequency.

The transmitters (4, 5, 11) are wirelessly connected to the receivers (7, 10) that activate the alarms (6, 8). The alarms are audible and/or visual.

The alarms are placed on the rear of the vehicle (8) and/or in beacons (6) located on the shoulder of the highway.

### Alarm located at the rear of the vehicle

In this embodiment, the alarm (8) is located at the rear of the vehicle, the alarm is a light alarm formed by a triangle connected to a receiver (10) that is wirelessly connected to the transmitter (4). The light source of the triangle is red LEDs. The triangle is on a flexible substrate that adheres to the rear of the vehicle.

The sides of the triangles can be between 30-150 mm, preferably 60 mm. The light intensity can range between 40-700 candelas. In a preferred embodiment, the luminescent triangle has a light intensity between 166-1666 lumens/m.

In a preferred embodiment, the connection is established via Bluetooth^{®} at 2.4 GHz

In this embodiment, when the switch (3) is pressed or when a collision occurs at more than 20 km/h, the pressure sensor (9) is deformed or the accelerometer (12) is activated, the circuit is closed, a wireless signal (3, 11) is emitted, which is transmitted to the luminous triangle (8). This warning light warns vehicles travelling behind and they can reduce the speed. The vehicle driver remains in the vehicle, preventing accidents.

### Alarm located in beacons

This embodiment is intended for use on roads where fog banks are common or where roads have gradient changes.

Beacons are placed on the cited roads with a separation distance between 0.1-1 km.

The receivers (7) of the alarms (6) in beacons are wirelessly connected to the sensor transmitter (5) by means of radio frequency at 433 MHz, preferably by means of RFI tags using GPS with a SIM card.

In a more preferred embodiment, the receivers (7) are formed by hardware consisting of an ESP32 communicating via UART with the SIM800L GSM module. The receiver is connected to an alarm (6) on a beacon, for example an LED strip, which will warn road users.

When the switch is pressed, for example when entering a fog bank, or when a collision occurs at more than 20 km/h, the circuits are closed and the transmitters (4, 5, 11) send a wireless signal that is transmitted to the alarms (6) of the beacons that are within the range of the receiver (7).

The alarms (6) on the beacons emit a sound or light signal that warns drivers in advance of emergency situations ahead. This way, collisions are avoided, especially in foggy areas. The beacons are located on the shoulder of highway spaced between 100-1000 meters.

The beacon alarms are connected to a power supply connected to solar panels.

Alarms are also located in beacons and at the rear of the vehicle.

### Description of the figure

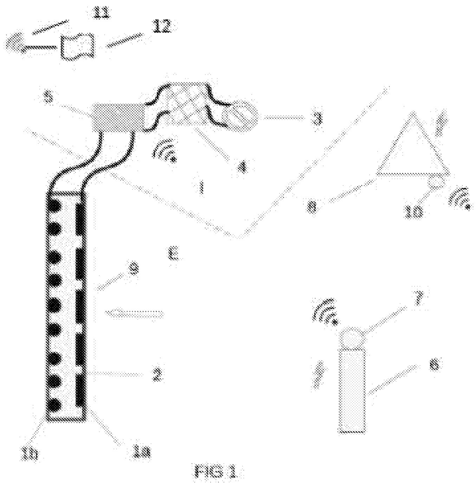

Figure 1 shows the preferred embodiment.

### Description of the preferred embodiment

Figure 1 shows the operation of the signalling device.

The device comprises two pressure sensors. The pressure sensor (9) is located on the outside (E) of the vehicle and the switch (3) is located on the inside (I) of the vehicle. The device further comprises an accelerometer (12).

The pressure sensor (9) is formed by the deformable part (2) that contains the electrodes (1a, 1b) inside. The deformable part is made of aluminium that deforms when an impact occurs at more than 20 km/h. The deformable part (2) is placed below the license plate. The electrodes (1a, 1b) are connected to the emitters (4, 5) by wire. The transmitters are placed on the vehicle's dashboard on the inside (E) of the vehicle, thus protecting them from the unfavourable weather conditions.

The transmitters (4, 5) are connected to each other and in turn connected to the switch (3). In this way, when a collision occurs at more than 20 km/h, both transmitters (4, 5) are activated. In the same way, when the switch (3) is pressed, the transmitters (4, 5) are activated because the circuit is closed.

The MPU6050 accelerometer (12) is connected to the wireless transmitter (11).

Each element of the assembly is composed of a microcontroller (ESP32) and a series of sensors and/or actuators that communicate with it.

The system contains a GSM module to establish a remote IoT data communication system. Thanks to the SIM connected to this module, a 2G connection is established, providing Internet connectivity via TCP/IP. The communication between receivers (7, 10) is achieved through this connectivity. Since both devices have internet connectivity, both devices can communicate using an IoT communication protocol called MQTT.

The transmitters (4, 5) and the receiver (10) are connected via Bluetooth^{®} at a frequency of 2.4 GHz. The receiver (10) activates the light signal of the triangle (8) attached to the rear window of the vehicle. The triangle (8) has 60 centimetres on each side and a red LED light located on a flexible support. The triangle had a light intensity of 700 candelas and 1500 lumens/m.

The transmitters (5, 11) and the receiver (7) are connected via UART. The transmitter (5) is a SIM800L GSM module and the receiver (7) comprises hardware consisting of an ESP32. The alarm (6) connects to the receiver a beacon located on the shoulder of highway.

The beacons (6) and their receivers (7), powered by solar panels, are located on the shoulder of highway at a distance of 100 meters. When the transmitter (5) is activated by the pressure sensor, it transmits the signal to the receiver (7), and the light signals of the beacons (6) are connected.

The claims detailed below are considered embodiments.

## Claims

1. Signalling device comprising:
- means for emitting a wireless signal from a vehicle when the vehicle stops or hits an obstacle at a speed greater than 20 km/h,
- a wireless receiver (7, 10),
- an alarm (6, 8) connected to the wireless receiver (7, 10),
**characterised in that** it does not contain GPS positioning modules.

2. Signalling device according to claim 1, **characterised in that** the wireless receiver (7) and the alarm (6) are located in beacons on the shoulder of highway.

3. Signalling device according to claims 1-2, **characterised in that** the means for emitting the wireless signal is a wireless transmitter (11) connected to an accelerometer (12) that closes the circuit when the vehicle has a collision at more than 20 km/h.

4. Signalling device according to claims 1-2 comprising a circuit with at least:
- a pressure sensor (3, 9),
- a wireless transmitter (4, 5)
- a wireless receiver (7, 10)
wherein the pressure sensor closes the circuit, **characterised in that** the wireless receiver is connected to an alarm (6-8).

5. Signalling device according to claim 4, **characterised in that** the pressure sensor is a switch (3) located inside the vehicle.

6. Signalling device according to claims 4-5, **characterised in that** the pressure sensor (9) is a deformable part (2) with two separate electrodes (1a ,1b), located on the outside of the vehicle, which closes the circuit when a collision occurs at more than 20 km/h.

7. Signalling device according to the preceding claims, **characterised in that** the alarm is a luminous triangle (8) located at the rear of the vehicle on a flexible support.

8. Signalling device according to claim 6, **characterised in that** the transmitters (4, 5) and the receiver (10) are connected via Bluetooth^{®} at 2.4 GHz.

9. Signalling device according to claims 1-8, **characterised in that** the alarm (6) is in beacons located on the shoulder of the road and the alarm (6) are LED strips.

10. Signalling device according to claim 9, **characterised in that** the transmitters (4, 5, 11) and the receiver (7) are connected via UART.

11. A succession of beacons, comprising a wireless receiver (7) that activates an alarm (6), **characterised in that** the alarms (6) are located in beacons on the shoulder of highway and spaced between 100-1000 meters.

12. A succession of beacons according to claim 11, **characterised in that** the wireless receiver (7) comprises a hardware consisting of an ESP32 communicating via UART with a GSM module, and the alarm (6) is an LED strip.

13. A succession of beacons according to claim 12, **characterised in that** the wireless receiver (7) is connected to wireless transmitters (4, 5, 11) located in a vehicle.
